# EUROPÄISCHE PATENTANMELDUNG

(11) **EP 1 207 059 A2**
(43) Veröffentlichungstag der Anmeldung: **22.05.2002**
(21) Anmeldenummer: 01126921.4
(22) Anmeldetag: 13.11.2001
(51) Int. Cl.: B60C 15/00, B60C 9/08, B29D 30/20

(54) **Fahrzeugreifen und Verfahren zur Herstellung eines Fahrzeugluftreifens**

(30) Priorität: 18.11.2000 DE 10057385
(71) Anmelder: Continental Aktiengesellschaft, 30165 Hannover (DE)
(72) Erfinder: Burfien, Joerg, 30823 Garbsen (DE); Lerner, Christian, 30169 Hannover (DE)

(57) **Zusammenfassung**

Die Erfindung betrifft einen Fahrzeugluftreifen in Radialbauart mit einem Gürtel, einem Laufstreifen, Wulstkernen (5) und zumindest einer Karkasslage (1), die zur Bildung von außen verlaufenden Hochschlägen (1c) um die beiden Wulstkerne (3) geführt ist. Die beiden Endbereiche (1a, 1b) der Karkasslage (1) überlappen einander zum Teil, wobei zumindest einer der Endbereiche der Karkasslage durch Schnitte verkürzte Eckbereiche aufweist.

Um das Entstehen von Seitenwandeinschnürungen wirkungsvoll zu reduzieren, ist die Überlappung derart durchgeführt, dass der in den Hochschlägen (1c) außen liegende Endbereich der Karkasslage der geschnittene Endbereich ist, und dass jeweils zumindest ein Teil des Überlappungsbereiches in Kontakt mit den Wulstkernen (5) steht.

## Beschreibung

Die Erfindung betrifft einen Fahrzeugluftreifen in Radialbauart mit einem Gürtel, einem Laufstreifen, Wulstkernen und zumindest einer Karkasslage, die zur Bildung von außen verlaufenden Hochschlägen um die beiden Wulstkerne geführt ist, wobei die beiden Endbereiche der Karkasslage einander zum Teil überlappen und zumindest einer der Endbereiche der Karkasslage durch Schnitte verkürzte Eckbereiche aufweist. Die Erfindung betrifft ferner ein Verfahren zur Herstellung eines derartigen Reifens.

Ein üblicher Aufbau eines Radialreifens sieht vor, dass zumindest eine aus einem in eine Kautschukmischung eingebetteten Karkassgewebe bestehende Karkasslage auf eine auf der Aufbautrommel direkt aufgebrachte Lage aus einer Kautschukmischung, die die Innenplatte bildet, aufgelegt wird. Die Karkasslage beinhaltet zueinander parallel verlaufende Korde, die im fertigen Reifen die in radialer Richtung verlaufenden Festigkeitsträger bilden. Dabei können die Karkasskorde zur radialen Richtung auch unter einem spitzen Winkel von bis zu etwa 13° verlaufen. Die Karkasslage(n) wird bzw. werden so aufgebracht, dass ihre Korde parallel zur Achse der Aufbautrommel orientiert sind. Um eine im fertigen Reifen in Umfangsrichtung geschlossene Lage zu bilden, werden die beiden Endbereiche jeder Karkasslage unter Vervollständigung einer Ringform miteinander verbunden, was durch ein Überlappen der beiden Endbereiche der Karkasslage erfolgt. Der Überlappungsbereich wird dabei üblicherweise in einer konstanten Breite von 2 bis 10 mm erstellt und erstreckt sich auch über die gesamte Breite der ringförmig geformten Karkasslage. Nach dem Setzen von Wulstkernen und Kernprofilen werden die seitlichen Bereiche der nun ringförmigen Karkasslage um die Wulstkerne geschlagen, wodurch die sogenannten Karkasshochschläge gebildet werden. Im fertigen Reifen weist daher der Überlappungsbereich eine doppelte Anzahl von Korden auf. Die höhere Verstärkung und die Spannung der Festigkeitsträger in diesem Bereich lassen nur eine geringere Dehnung der Korde während des Bombierens des Reifens und während der Resterhebung in der Vulkanisationsform zu. Unter Innendruck bilden sich daher im fertigen Reifen in den Reifenseitenwänden sogenannte Seitenwandeinschnürungen.

Ein Radialreifen der eingangs genannten Art ist aus der EP-A-0 120 623 bekannt. Hier wird vorgeschlagen, die beiden Endbereiche der Karkasslage nicht über deren gesamte Breite zu überlappen, indem zumindest an einem Endbereich der Karkasslage die Eckbereiche abgeschnitten werden, sodass eine gegenseitige Überlappung der beiden Endbereiche nur deutlich innerhalb der Positionen für die beiden Wulstkerne erfolgt. Beim während des Reifenaufbaus stattfindenden Bombiervorgangs sowie auch beim Einpressen des Rohreifens in die Vulkanisationsform werden die Karkasskorde gedehnt und in ihre endgültige Form im Reifen gebracht. Dabei können die vergleichsweise frei bewegliche Korde im Bereich der Zuschnitte soweit unter die Wulstkerne gezogen werden, dass von Festigkeitsträgern freie Stellen entstehen können. Hier treten dann zwar keine Seitenwandeinschnürungen mehr auf, aber diese freie Stellen sind Schwachstellen im Reifen, die zu einer Beulenbildung unter Innendruck führen können.

Der Erfindung liegt nun die Aufgabe zu Grunde, den Stoß- bzw. Überlappungsbereich der Endbereiche einer einlagigen Karkasslage so auszuführen, dass zwar der Effekt des Bildens von Seitenwandeinschnürungen deutlich vermindert wird, die Nachteile des bekannten Standes der Technik jedoch nicht auftreten können.

Was den Reifen betrifft, wird die gestellte Aufgabe erfindungsgemäß dadurch gelöst, dass der in den Hochschlägen außen liegende Endbereich der Karkasslage der geschnittene Endbereich ist, und dass jeweils zumindest ein Teil des Überlappungsbereiches in Kontakt mit den Wulstkernen steht.

Was das Herstellungsverfahren betrifft, wird die gestellte Aufgabe dadurch gelöst, dass die Schnitte außerhalb der Setzpositionen der Wulstkerne durchgeführt werden, und dass der geschnittene Endbereich vom zweiten Endbereich überlappt wird.

Nach der Erfindung wird daher einerseits eine mechanische Anbindung des Überlappungsbereiches an die Wulstkerne sicher gestellt, wobei sich diese Anbindung beim Bombiervorgang und bei der Dehnung des Reifens in der Vulkanisationsform zwar verringern kann, aber in jedem Fall erhalten bleibt. Dadurch, dass der geschnittene Endbereich in den Hochschlägen außen liegt, wird ein größerer Auszug dieses Karkassbereiches gegenüber dem darunter befindlichen erzielt. Auftretende Kräfte werden daher vorrangig vom ungeschnittenen Bereich übernommen. Damit können Seitenwandeinschürungen signifikant vermindert werden.

Für einen im Überlappungsbereich möglichst gleichmäßigen Spannungsverlauf ist es von Vorteil, wenn durch die Schnitte zumindest zum Teil gegenüber der radialen Richtung des Reifens schräg verlaufende Schnittkanten gebildet sind (Anspruch2). Beim Aufbau des Reifens werden daher die Schnitte vorteilhafterweise unter Bildung von zur Achse der Aufbautrommel schräg verlaufenden Schnittkanten durchgeführt (Anspruch 8).

Der Spannungsverlauf lässt sich durch bestimmte Schnittkombinationen bzw. Schnittverläufe entsprechend beeinflussen, insbesondere um den Gegebenheiten bei unterschiedlich lang ausgeführten Karkasshochschlägen entsprechen zu können. Dabei kann es von Vorteil sein, wenn die Schnitte derart durchgeführt sind, dass zumindest zum Teil in radialer Richtung des Reifens verlaufende Schnittkanten gebildet sind (Anspruch 3). In diesem Fall werden die Schnitte beim Aufbau des Reifens unter Bildung von zur Achse der Aufbautrommel zumindest im Wesentlichen parallel verlaufenden Schnittkanten durchgeführt (Anspruch 9).

Dabei können, bezogen auf den Reifen, gegenüber der radialen Richtung schräg verlaufende oder in radialer Richtung verlaufende Schnittkanten mit zumindest im Wesentlichen in Umfangsrichtung verlaufenden Schnittkanten kombiniert sein (Anspruch 4). Der zugehörige Schnitt beim Aufbau des Reifens wird in diesem Fall derart durchgeführt, dass auch zumindest im Wesentlichen in Umfangsrichtung der Aufbautrommel verlaufende Schnittkanten gebildet werden (Anspruch 10).

Das Ausmaß des Auszuges des überlappenden Bereiches der Karkasslage unter die Wulstkerne kann durch die Maßnahme, den Karkasshochschlag vergleichsweise kurz auszuführen, unterstützt werden. Bei Pkw-Reifen ist es günstig, wenn die Karkasshochschläge, in radialer Richtung senkrecht zur Reifenachse und von der am weitesten radial innen gelegenen Stelle der Wulstkerne gemessen, bis auf eine Höhe von 30 mm reichen (Anspruch 5).

Eine weitere Maßnahme, das Ausmaß des Auszuges zu beeinflussen, besteht darin, beim Aufbau des Reifens die beiden Endbereiche der Karkasslage variabel zu überlappen. Insbesondere wird die Überlappung derart durchgeführt, dass die Seitenkanten der Karkasslage entweder aneinanderstoßen oder noch geringfügig beabstandet bleiben (Anspruch 7).

Weitere Merkmale, Vorteile und Einzelheiten der Erfindung werden nun anhand der Zeichnung, die schematische Darstellungen von Ausführungsbeispielen der Erfindung enthält, näher beschrieben. Dabei zeigen
Fig. 1 die beiden Endbereiche einer Karkasslage vor dem Zusammenfügen mit einer ersten Ausführungsform der Erfindung,
Fig. 2 bis 4 weitere Ausführungsformen der Erfindung, wobei jeweils nur Teile der Endbereiche einer Karkasslage vor dem Zusammenfügen dargestellt sind,
Fig. 5 und Fig. 6 jeweils eine Möglichkeit der Überlappung der Endbereiche einer gemäß Fig. 1 ausgeführten Karkasslage und
Fig. 7 eine Schnittansicht eines Wulstbereiches eines Fahrzeugluftreifens.

Die Erfindung befasst sich mit einer speziellen Ausführung des Überlappungsbereiches von Karkasslagen eines Radialreifens, insbesondere eines PKW-Reifens.

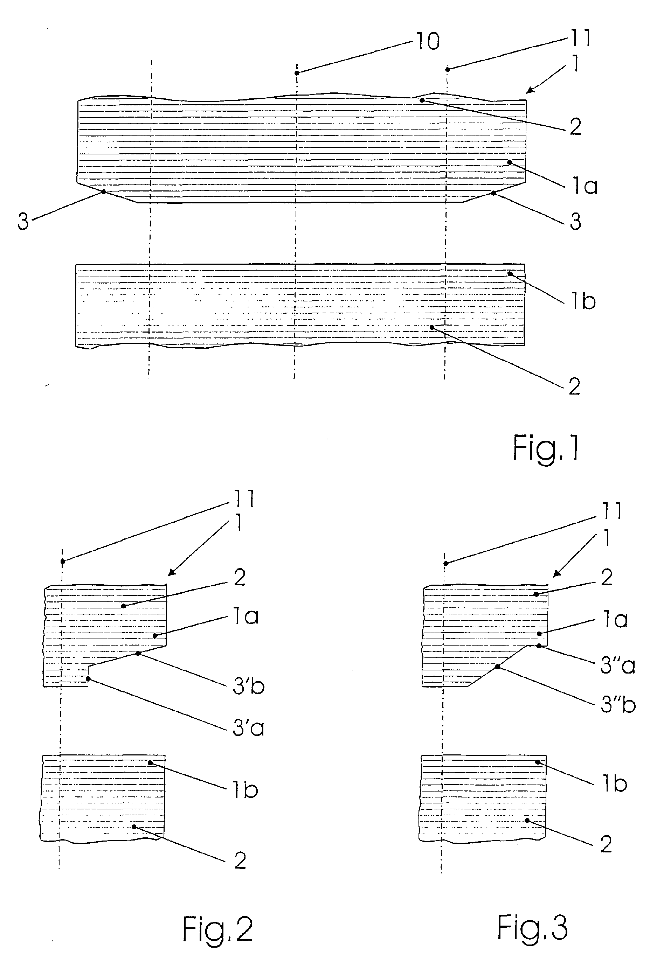

Fig. 1 zeigt nun die beiden Endbereiche 1a, 1b einer Karkasslage 1, bevor diese unter gegenseitiger Überlappung zusammengefügt werden. Dieses Zusammenfügen erfolgt während des Aufbaus der Reifens auf einer zylindrischen Aufbautrommel, von welcher in Fig. 1 mit 10 die mittige Umfangslinie angedeutet ist.

Die Karkasslage 1 kann aus einem üblichen Karkassgewebe bestehen, welches insbesondere aus Polyester hergestellt ist. Mit 2 sind die im Karkassgewebe parallel zueinander und bei der dargestellten Ausführungsform parallel zur Achse der nicht dargestellten Aufbautrommel ausgerichteten Korde bezeichnet, die im fertigen Reifen die in den Reifenseitenwänden in radialer Richtung verlaufenden Festigkeitsträger der Karkasse bilden.

Die in Fig. 1 symmetrisch zur Linie 10 eingezeichneten strichpunktierten Linien 11 kennzeichnen jene Stellen, wo beim Aufbauvorgang des Reifens die Wulstkerne auf der Karkasslage 1 positioniert werden.

Wie Fig. 1 zeigt ist der mit 1b bezeichnete Endbereich der Karkasslage 1 an den Eckbereichen zu den Seitenkanten zugeschnitten, der zweite Endbereich 1b ist in einer Rechteckform belassen. Dabei ist der Endbereich 1a der Karkasslage 1 an den Eckbereichen zu den Seitenkanten derart zugeschnitten, dass, ausgehend von einer Rechteckform, gleich große Dreiecke weggeschnitten sind. Dadurch entstehen gegenüber der Umfangslinie 10 der nicht dargestellten Aufbautrommel gegensinnig schräg verlaufende Schnittkanten 3. Dies entspricht einer seitlichen Kürzung der Karkasslage 1, wobei die Schnittkanten 3 erst außerhalb der Wulstkernpositionen beginnen. In jedem Fall werden die Schnittkanten 3 so gesetzt, dass im fertig aufgebauten und auch im fertig vulkanisierten Reifen eine mechanische Anbindung, ein Kontaktbereich, der beiden Wulstkerne zum Überlappungsbereich der Karkasslagenendbereiche 1a, 1b gegeben ist. Die Schnitte werden dabei derart durchgeführt, dass die jeweils schräg nach außen verlaufenden Schnittkanten 3 einen Winkel von ca. 15° bis 45° mit der Längsachse der Aufbautrommel einschließen.

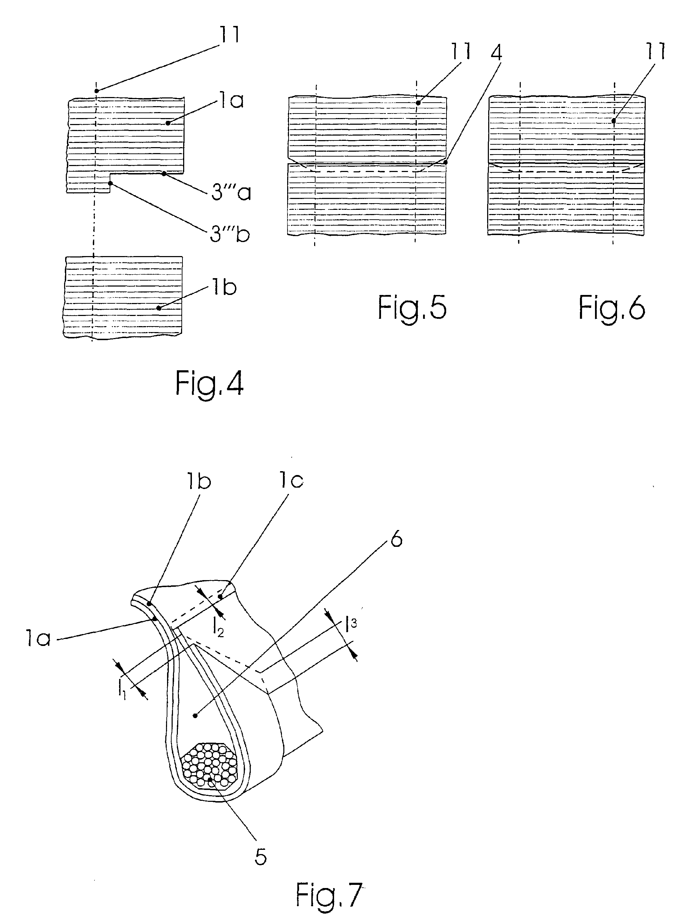

Fig. 5 und Fig. 6 zeigen zwei grundsätzliche Möglichkeiten der Ausführung des Überlappungsbereiches. Gemäß Fig. 5 wird der Endbereich 1a mit dem zweiten Endbereich 1b soweit überlappt, dass zwischen den Seitenkanten jeweils ein schmaler Spalt verbleibt. Wie es in Fig. 6 gezeigt ist, kann die Überlappung der beiden Endbereiche 1a, 1b auch so durchgeführt werden, dass die Seitenkantenenden der beiden Endbereiche 1a, 1b gerade aneinander stoßen. Um bei beiden Varianten einen übereinstimmend breiten Überlappungsbereich zu erzielen, können die Schnittkantenwinkel entsprechend gewählt werden.

Die Überlappung und die Schnitte werden jedoch so durchgeführt, dass bei beiden Wulstkernen der oben erwähnte Anbindungsbereich der Wulstkerne zum überlappenden Bereich gewährleistet ist. Auch Fig. 5 und 6 zeigen anhand strichpunktierter Linien 11 die entsprechenden Wulstkernpositionen. Die Überlappung wird gemäß der Erfindung ferner derart durchgeführt, dass der ungeschnittene Endbereich 1b über den geschnittenen Endbereich 1a gelegt wird, wie es auch in Fig. 5 und 6 gezeigt ist.

Nach dem Setzen der Wulstkerne, gegebenenfalls unter gleichzeitigem Setzen von Kernprofilen, werden die Seitenbereiche der Karkasslage 1 um die Wulstkerne geschlagen.

In einem späteren Stadium des Reifenaufbaus, wenn der Reifen bereits mit einem Gürtelverband und einem Laufstreifen komplettiert ist, wird ein Bombiervorgang durchgeführt, bei dem der Rohreifen in eine Toroidform gebracht wird, wobei die Karkasslage 1 im Bereich der Überlappung mit den Endbereichen ein wenig unter die Wulstkerne gezogen wird. Dieser Effekt ist in Fig. 7 verdeutlicht, wo einer der Wulstkerne 5, ein Kernprofil 6 und der Überlappungsbereich zu sehen sind. Zu erkennen ist ferner der im Hochschlag außen verlaufende geschnittene Endbereich, der hier den ungeschnittenen überlappt. Die strichlierten Linien zeigen die Position des Lagenendbereiches mit der Schnittkante 3 vor dem Bombiervorgang gegenüber dem sonstigen umgeschlagenen Bereich 1c. Die durchgezogenen Linien zeigen die Position nach dem Bombiervorgang. Der Umschlag 1c ist eine Strecke I₂ unter dem Kern 5 gezogen worden, der Lagenbereich mit der Schnittkante 3 an der Spitze um eine Strecke I₁, das untere Ende der Schnittkante 3 um eine Strecke I₃. Dabei sind I₁ und I₃ größer als I₂, insbesondere ist auch I₁ größer als I₃. Der geschnittene, verkürzte Lagenendbereich 1a wird somit beim Bombiervorgang mehr unter die Wulstkerne gezogen als der Lagenendbereich 1b. Im fertigen Reifen werden in diesem Bereich Kräfte daher vorwiegend vom Lagenendbereich 1b getragen, wodurch Seitenwandeinschürungen vermindert werden. Die schräg verlaufenden Schnittkanten 3 bewirken zusätzlich einen harmonischer Spannungsverlauf und zum Ende der Überlappung zu einen steigenden Auszug der betreffenden Karkassbereiche unter die Wulstkerne 5, was ebenfalls Seitenwandeinschürungen vermindert.

Der gewünschte Auszug kann durch eine weitere Maßnahme unterstützt werden, nämlich durch einen vergleichsweise kurz ausgeführten Karkassumschlag. Bei PKW-Radialreifen sollte der Karkassumschlag, von der axial am weitesten innen gelegenen Stelle des Wulstkernes aus in radialer, zur Reifenachse senkrechter Richtung gemessen, maximal bis auf eine Höhe von 30 mm reichen.

Beim Vulkanisieren des Rohreifens in eine der üblichen Vulkanisationsformen werden der Reifen und somit die Karkasslagen nochmals einer Dehnung, die den erwähnten Auszug geringfügig verstärkt, unterworfen. Diese Dehnung erfolgt während des Einpressens des Rohreifens in die profilierten Bereiche der Vulkanisationsform durch das in seinen Innenraum eingeleitete Vulkanisationsmedium und wird als Resterhebung bezeichnet.

Fig. 2 und Fig. 4 zeigen weitere Ausführungsvarianten der Erstellung von Schnitten an einem der beiden Endbereiche einer Karkasslage 1. Dabei sind jeweils nur die einen Seitenbereiche der Endbereiche 1a, 1b der Karkasslage 1 dargestellt. Ausgehend von einer Rechteckform des Endbereiches 1a wird bei den in Fig.2 und 3 dargestellten Ausführungsvarianten jeweils ein trapezförmiger Eckbereich weggeschnitten. Gemäß Fig. 2 erfolgt der Zuschnitt derart, dass innen ein kurzer Schnitt 3'a parallel zur Linie 11 durchgeführt ist, an den nach außen zu wieder ein schräg verlaufender Schnitt 3'b anschließt. Bei der Ausführungsform gemäß Fig. 3 folgt, von innen nach außen betrachtet, einer schräg verlaufenden Schnittkante 3"b eine kurze Schnittkante 3"a rechtwinkelig zur Linie 11.

Bei der in Fig. 4 gezeigten Ausführungsform wird der Eckbereich rechteckförmig geschnitten, sodass an eine kurze Schnittkante 3"'b parallel zur Linie 11 eine längere Schnittkante 3"'a senkrecht zur Linie 11 anschließt.

Als zusätzliche Maßnahme kann ein Einstrich der gekürzten Karkasslagenendbereiche 1a die gegenseitige Gleitbereitschaft der im Umschlagbereich überlappenden Endbereiche zur Unterstützung des erwünschten Auszuges erhöhen.

Die Erfindung ist auf die dargestellten Ausführungsformen nicht eingeschränkt. Insbesondere können die Zuschnitte des einen Karkasslagenendbereiches auch in anderer Form erfolgen.

## Patentansprüche

1. Fahrzeugluftreifen in Radialbauart mit einem Gürtel, einem Laufstreifen, Wulstkernen (5) und zumindest einer Karkasslage (1), die zur Bildung von außen verlaufenden Hochschlägen (1c) um die beiden Wulstkerne (3) geführt ist, wobei die beiden Endbereiche (1a, 1b) der Karkasslage (1) einander zum Teil überlappen und zumindest einer der Endbereiche der Karkasslage durch Schnitte verkürzte Eckbereiche aufweist,
**dadurch gekennzeichnet,**
**dass** der in den Hochschlägen (1c) außen liegende Endbereich der Karkasslage der geschnittene Endbereich ist, und dass jeweils zumindest ein Teil des Überlappungsbereiches in Kontakt mit den Wulstkernen (5) steht.

2. Fahrzeugluftreifen nach Anspruch 1, **dadurch gekennzeichnet, dass** durch die Schnitte zumindest zum Teil schräg verlaufende Schnittkanten (3, 3'b, 3"b) gebildet sind.

3. Fahrzeugluftreifen nach Anspruch 1, **dadurch gekennzeichnet, dass** durch die Schnitte zumindest zum Teil in radialer Richtung verlaufende Schnittkanten (3"a, 3"'a) gebildet sind.

4. Fahrzeugluftreifen nach einem der Ansprüche 1 bis 3, **dadurch gekennzeichnet, dass** schräg verlaufende oder in radialer Richtung verlaufende Schnittkanten (3'b, 3"b, 3"a, 3"'a) mit zumindest im Wesentlichen in Umfangsrichtung verlaufenden Schnittkanten (3'a, 3"'b) kombiniert sind.

5. Fahrzeugluftreifen, welcher ein PKW-Reifen ist, nach einem der Ansprüche 1 bis 4, **dadurch gekennzeichnet, dass** die Karkasshochschläge (1c), in radialer Richtung senkrecht zur Reifenachse und von der am weitesten radial innen gelegenen Stelle der Wulstkerne (5) gemessen, bis auf eine Höhe von 30 mm reichen.

6. Verfahren zur Herstellung eines Fahrzeugluftreifens mit einem Gürtel, einem Laufstreifen, Wulstkernen (5) und zumindest einer Karkasslage (1), wobei der Reifen auf einer zylindrischen Aufbautrommel aufgebaut wird, wobei die aufgebrachte Karkasslage an den Eckbereichen eines ihrer Endbereiche (1a) durch je einen Schnitt verkürzt wird, die beiden Endbereiche (1a, 1b) durch Überlappen zusammengefügt, die Wulstkerne (5) gesetzt und die Seitenbereiche der Karkasslage (1) um die Wulstkerne (5)geschlagen werden und der Reifen, insbesondere in bekannter Weise, fertig aufgebaut und anschließend vulkanisiert wird,
**dadurch gekennzeichnet,**
**dass** die Schnitte außerhalb der Setzpositionen der Wulstkerne (5) durchgeführt werden, und dass der geschnittene Endbereich (1a) vom anderen Endbereich (1b) überlappt wird.

7. Verfahren nach Anspruch 6, **dadurch gekennzeichnet, dass** die beiden Endbereiche (1a, 1b) soweit miteinander überlappt werden, dass ihre Seitenkanten entweder aneinander stoßen oder noch geringfügig beabstandet bleiben.

8. Verfahren nach Anspruch 6 oder 7, **dadurch gekennzeichnet, dass** die Schnitte unter Bildung von zur Achse der Aufbautrommel schräg verlaufenden Schnittkanten (3, 3'b, 3"b) durchgeführt werden.

9. Verfahren nach Anspruch 6 oder 7, **dadurch gekennzeichnet, dass** die Schnitte unter Bildung von zur Achse der Aufbautrommel zumindest im Wesentlichen parallel verlaufenden Schnittkanten (3"a, 3"'a) durchgeführt werden.

10. Verfahren nach einem der Ansprüche 6 bis 9, **dadurch gekennzeichnet, dass** die Schnitte unter Bildung von zumindest im Wesentlichen in Umfangsrichtung der Aufbautrommel verlaufenden Schnittkanten (3'a, 3"'b) durchgeführt werden.
